# FASCICULE DE BREVET EUROPEEN

(11) **EP 2 535 246 B1**
(45) Date de publication et mention de la délivrance du brevet: **19.03.2014**
(21) Numéro de dépôt: 12171833.2
(22) Date de dépôt: 13.06.2012
(51) Int. Cl.: B62J 23/00, B62J 33/00, B62K 21/26

(54) **Dispositif de protection pour véhicules motorisés équipés d'un guidon**
Schutzvorrichtung für motorisierte Fahrzeuge, die mit einem Lenker ausgestattet sind
Protection device for motor vehicles equipped with a handlebar

(30) Priorité: 15.06.2011 FR 1155234
(43) Date de publication de la demande: 19.12.2012
(73) Titulaire: We Group Europe, 38270 Beaurepaire (FR)
(72) Inventeur: Roux, Serge, 38270 REVEL-TOURDAN (FR)
(74) Mandataire: Thibault, Jean-Marc

(56) Documents cités:
- EP-A2- 2 006 197
- CN-Y- 2 268 670
- GB-A- 2 113 163
- JP-A- 2010 285 018

## Description

La présente invention concerne le domaine des accessoires de protection pour les utilisateurs de véhicules motorisés équipés de guidon tels que des motocyclettes, des tricycles ou encore des quads.

Plus particulièrement, la présente invention concerne un manchon de protection manuelle destiné à être monté sur chaque poignée du guidon de tels véhicules motorisés afin de protéger le pilote contre le froid et les intempéries.

On connait déjà des manchons de protection de ce type. Ces dispositifs sont de façon générale constitués d'une moufle dotée sur un côté longitudinal d'au moins un orifice permettant l'enfilement par cet orifice de la moufle sur les poignées du guidon et les leviers de commande de freins et d'éclairage du véhicule. La forme de la moufle peut être universelle pour s'adapter aussi bien à une poignée droite qu'une poignée gauche de guidon ou à l'inverse présenter une forme profilée adaptée pour chacune des poignées gauche et droite et procurer un meilleur confort d'utilisation. Toutefois, de tels manchons sont généralement encombrants et mal pratiques dans leur utilisation. En effet, ils présentent parfois un manque de tenue ou de rigidité qui rend l'enfilement et le retrait des mains délicats. De plus, les commodos de commandes étant couverts, le pilote du véhicule doit actionner lesdits commodos « en aveugle », par tâtonnement ce qui, là encore, peut s'avérer dangereux.

On connait également des manchons de protection tels que décrits par exemple dans la demande de brevet européen EP 2 006 197 A2. Dans cette forme de réalisation, le manchon n'est destiné qu'à recouvrir la poignée de guidon et non les commodos. Afin d'améliorer la tenue du manchon sur la poignée, celui-ci est doté d'un collet de verrouillage du manchon sur la poignée à une première extrémité au niveau de l'ouverture d'enfilement du manchon. Ce collet prévient aussi des tentatives de vol.

En complément, le manchon comporte également un bouchon localisé sur une face interne opposée à l'ouverture d'enfilement. Ce bouchon est destiné à être enfilé sur l'extrémité libre de la poignée sur laquelle le manchon est monté afin de procurer un meilleur maintien du manchon et faciliter l'enfilement de la main dans celui-ci par l'ouverture de passage postérieure procurée à cet effet. Toutefois, la mise en place du collet de verrouillage est ardue et la tenue du bouchon quant à elle est loin d'être optimale car le bouchon ne s'adapte pas correctement à toutes les poignées en fonction du diamètre d'extrémité de celles-ci.

La présente invention a pour but de procurer un nouveau type de manchon de protection dont la mise en place et le retrait sont rapides et aisés, présentant une bonne tenue en position et pouvant s'adapter à toute taille de poignée de guidon en procurant un maintien efficace du manchon sur la poignée facilitant l'insertion et le retrait de la main du manchon, même en circulation.

A cette fin, l'invention propose un dispositif de protection des mains d'un conducteur de véhicule motorisé muni d'un guidon de direction, comportant un fourreau de protection comportant sur un côté au moins un orifice d'insertion d'une poignée de guidon et d'un commodo de frein associé à cette poignée et au moins une ouverture postérieure permettant le passage et l'insertion d'une main à l'intérieur du fourreau, et des moyens de fixation du fourreau à une extrémité libre de la poignée de guidon insérée dans le fourreau par l'orifice d'insertion prévu à cet effet. De façon caractéristique de l'invention, les moyens de fixation du fourreau comportent un socle solidaire du fourreau et un embout de serrage de l'extrémité libre de la poignée du guidon, apte à être emboîté sur ladite poignée par déformation élastique et monté pivotant sur le socle autour d'un axe de rotation.

Le dispositif de protection de l'invention procure l'avantage, grâce à son embout de serrage, de procurer une mise en place plus aisée du manchon sur les poignées de guidon d'un véhicule tel qu'une motocyclette ou un tricycle à moteur. De plus, le dispositif de protection de l'invention est totalement universel et peut donc être monté sur tout véhicule de part la déformabilité élastique de l'embout de serrage qui permet l'emboîtement dudit embout sur des poignées de tout type et de tout diamètre.

L'embout de serrage étant pivotant sur son socle solidaire du fourreau, la liaison de l'embout à la poignée n'entrave pas la rotation éventuelle de la poignée de gaz du véhicule et ainsi ne perturbe pas le pilotage du véhicule, tout en garantissant un bon maintien en position sensiblement horizontale du fourreau.

Selon une caractéristique préférée, l'embout de serrage coopère avec un élément de sertissage dudit embout sur la poignée. Cet élément de sertissage peut notamment avantageusement être constitué d'un lien de matière plastique de type collet de serrage automatique. Un tel élément de sertissage permet en quelque sorte de sécuriser le blocage de l'embout de serrage sur la poignée de guidon d'un véhicule équipé.

Selon une autre caractéristique préférée, l'embout de serrage comporte au moins deux griffes symétriques par rapport à l'axe de rotation de l'embout de serrage sur le socle et mobiles par déformation élastique par rapport à cet axe de rotation, lesdites griffes comprenant à une extrémité libre une tête munie sur une paroi interne d'une dent ou d'un crochet. La fourniture de telles griffes sur l'embout de serrage du dispositif de l'invention permet au dispositif d'être totalement universel et d'assurer une bonne accroche de l'embout sur tout type de poignée de guidon, que ce soit une poignée simple, une poignée à masselotte d'équilibrage, ou encore une poignée à butée d'extrémité.

Toujours de façon préférée, l'embout de serrage comporte entre deux et dix griffes symétriques par rapport à l'axe de rotation de l'embout de serrage sur le socle et mobiles par déformation élastique par rapport à cet axe de rotation, lesdites griffes s'inscrivant dans une enveloppe de révolution conique ou tronconique autour de l'axe de rotation. La multiplication des griffes procure à la fois fiabilité et solidité d'accrochage de l'embout sur la poignée de guidon.

Dans un mode de réalisation, l'élément de sertissage est logé dans une gorge formée sur une paroi externe de la tête des griffes. Une telle gorge s'avère en particulier avantageuse en ce qu'elle rend possible la mise en place de l'élément de sertissage sur l'embout avant que le dispositif ne soit installé sur une poignée de guidon de véhicule avec la garantie que cet élément sera aisément accessible et positionné comme il le faut pour une bonne installation du dispositif sur la poignée une fois la mise en place de l'embout réalisée par emboîtement sur ladite poignée. Ceci procure une grande facilité d'installation du dispositif de l'invention.

Dans un mode de réalisation, les griffes comportent sur leur paroi interne un surfaçage antidérapant. Un tel surfaçage renforce encore l'efficacité de liaison de l'embout de serrage sur la poignée.

De façon avantageuse, le surfaçage antidérapant est constitué d'une matière à base d'élastomère ou par un traitement de surface de la paroi interne des griffes.

Dans un mode de réalisation, le socle et l'embout de serrage sont constitués d'une matière plastique ou métallique. S'il s'agit en particulier d'une matière plastique, le nylon® sera notamment particulièrement privilégié.

Dans un mode de réalisation particulier, le fourreau comporte un orifice d'insertion pour la poignée de guidon et un orifice d'insertion du levier de frein, lesdits orifices étant distincts.

Enfin, de façon préférée, le fourreau du dispositif de l'invention peut avantageusement être constitué d'une matière synthétique ou naturelle telle que notamment un néoprène ou du cuir, le cas échéant doublé sur la surface interne du fourreau pour renforcer confort et chaleur du dispositif pour l'utilisateur.

Diverses autres caractéristiques ressortent de la description faite ci-dessous en référence aux dessins annexés qui représentent un mode de réalisation préféré du dispositif de protection de l'invention. Sur ces figures :
- La figure **1** représente en perspective un dispositif de protection conforme à la présente invention avant son installation sur une poignée de guidon d'un véhicule tel un scooter;
- Les figures **2A** et **2B** représentent suivant deux vues en perspective le dispositif de protection de l'invention de la figure **1** et son mode de montage sur une poignée de guidon de véhicule ;
- La figure **3** représente le mode d'assemblage du dispositif de protection de l'invention sur une poignée de guidon de véhicule après insertion de ladite poignée dans le dispositif suivant le mode défini aux figures **2A** et **2B** **;**
- La figure **4** représente la finalisation de l'assemblage du dispositif de protection de l'invention sur une poignée à l'aide d'un élément de sertissage ;
- Les figures **5A** à **5C** représentent schématiquement des vues de détail en coupe longitudinale de la coopération entre les moyens de fixation du fourreau du dispositif de l'invention dans le mode de réalisation préféré décrit et une poignée de guidon à masselotte d'équilibrage ;
- Les figures **6A** et **6B** représentent schématiquement des vues de détail en coupe longitudinale de la coopération entre les moyens de fixation du fourreau du dispositif de l'invention dans le mode de réalisation préféré décrit et une poignée de guidon à butée d'extrémité ;
- Les figures **7A** et **7B** représentent, en perspective et en vue de dessus respectivement, les moyens de fixation du fourreau du dispositif de l'invention dans le mode de réalisation préféré présenté aux figures **2** à **6****.**

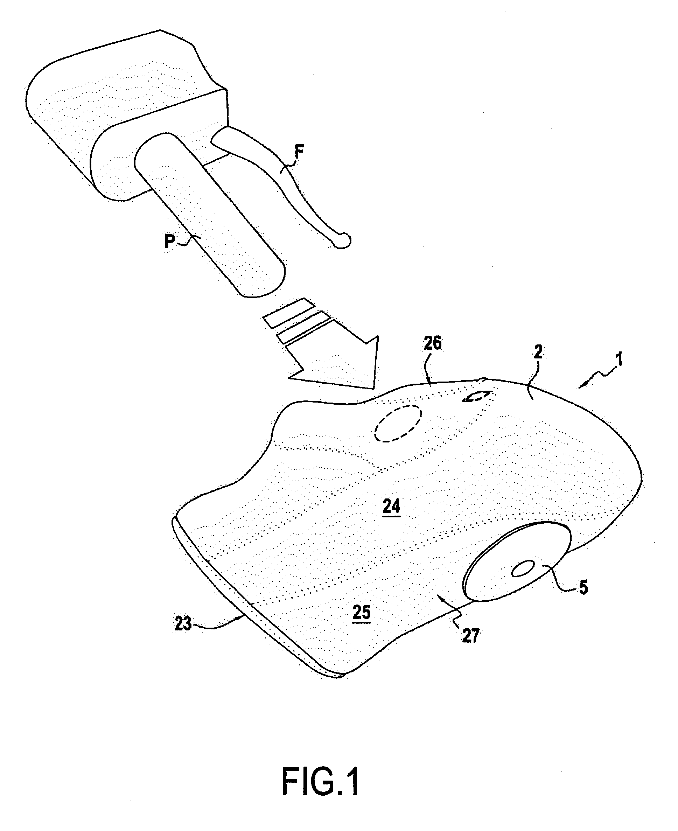

En référence aux figures **1** à **3** en particulier, la présente invention propose un nouveau dispositif de protection pour les mains des conducteurs de véhicules motorisés équipés d'un guidon de direction tels que des motos, scooters, tricycles ou encore quads.

De façon traditionnelle, le dispositif **1** de l'invention comporte en premier lieu un fourreau **2** en forme générale de moufle doté sur un côté longitudinal, d'un premier orifice **21** d"introduction d'une poignée de guidon **P** et d'un deuxième orifice **22** d'introduction d'un levier de frein **F** associé à la poignée **P** sur le guidon. Le fourreau **2** comporte également une ouverture postérieure **23** d'introduction de la main d'un utilisateur à l'intérieur du fourreau **2,** similaire à celle d'un gant ou d'une moufle classique, mais de préférence renforcée par un ou plusieurs élément d'armature (non représentés) sur sa périphérie afin de maintenir ladite ouverture **23** constamment ouverte pour faciliter introduction et retrait de la main à l'intérieur du fourreau **2.**

Bien entendu, les deux orifices distincts **21, 22** procurés dans l'exemple de réalisation présenté sur les figures jointes peuvent être, le cas échéant, remplacés par un unique orifice de grande ouverture permettant l'insertion commune de la poignée et du levier de frein dans le fourreau par ce seul orifice. Toutefois, cette solution n'est pas privilégiée en pratique car elle est défavorable à une bonne étanchéité du fourreau, étanchéité nécessairement attendue par l'utilisateur d'un dispositif de protection tel que celui de l'invention.

Pour cette raison, les premiers et seconds orifices **21, 22** sont avantageusement sensiblement circulaires, d'un diamètre légèrement inférieur aux diamètres de la poignée **P** de guidon et levier de frein **F** de cette poignée sur laquelle le dispositif de l'invention **1** doit être installé afin d'épouser au plus près, par simple élasticité de la matière constitutive du fourreau, les contours de la poignée **P** et du levier de frein et ainsi procurer une bonne étanchéité de contact.

Le fourreau **2** peut être constitué de façon préférée par assemblage, à l'aide de coutures ou de soudures, de plusieurs panneaux de matière, notamment de trois ou quatre panneaux. Comme cela ressort des figures **1** à **3****,** il peut être notamment formé de deux panneaux principaux **24, 25** supérieur et inférieur de forme sensiblement identique et d'un troisième panneau **26** de côté dans lequel sont formés les premier et second orifices **21, 22** d'insertion de la poignée **P** et du levier de frein **F.** Ce panneau de côté **26** peut notamment de préférence être d'une épaisseur moindre que les panneaux principaux **24, 25** afin de faciliter, d'une part, le passage des poignée **P** et levier de frein **F** dans les orifices, mais aussi d'être aisément déformable par le conducteur du véhicule à l'aide de son pouce pour actionner le cas échéant un bouton de commande sur le guidon sans avoir à sortir sa main du fourreau **2.**

De préférence encore, le panneau de côté **26** peut être avantageusement préformé pour l'extension interne du pouce du conducteur, telle une réelle moufle, pour faciliter encore ces actions de commandes du pouce au travers du fourreau **2** sans avoir à lâcher la poignée **P,** comme lors de la conduite classique d'un véhicule à guidon.

La matière constitutive du fourreau **2** peut être synthétique ou naturelle. En particulier, le fourreau **2** peut être constitué de panneaux **24, 25, 26** de néoprène, le cas échéant de différentes épaisseurs, notamment comme évoqué précédemment pour ce qui concerne le panneau de côté du fourreau.

Une matière comme le néoprène présente de nombreux avantages pour la réalisation du fourreau **2** du dispositif de protection **1** de l'invention. Notamment le néoprène peut être soudé plutôt que cousu, ce qui améliore encore l'étanchéité du fourreau **2,** ainsi que l'esthétique de celui-ci. De plus, le néoprène présente une bonne souplesse et résistance à l'arrachement, ainsi que de bonnes propriétés d'amortissement des chocs.

Le fourreau **2** peut bien entendu également être réalisé en toute autre matière synthétique ou encore en une matière naturelle telle que le cuir, et également être doublée sur l'intérieur pour améliorer le confort de l'utilisateur lorsque celui-ci y introduit sa main par l'ouverture postérieure.

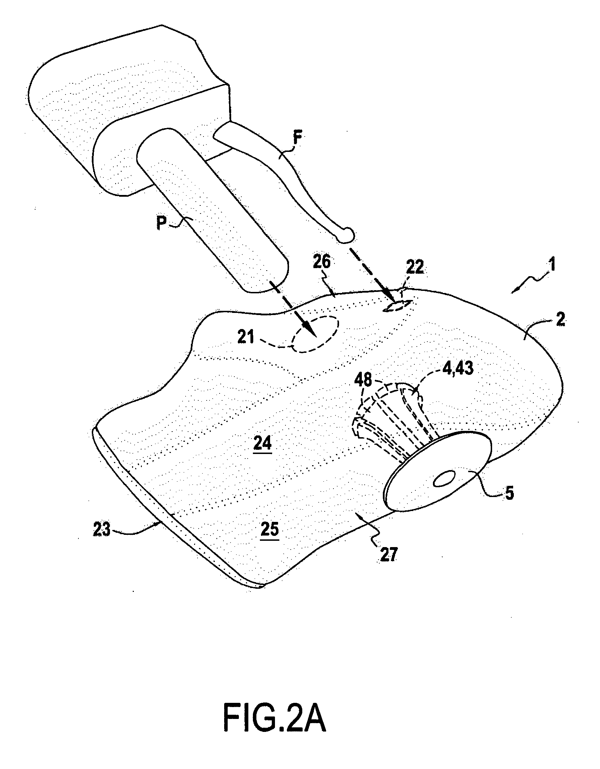

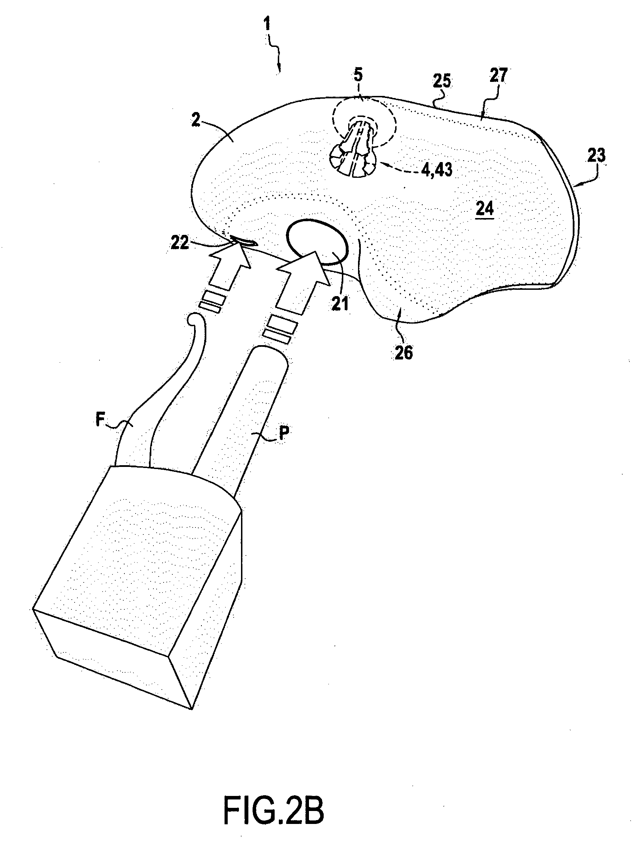

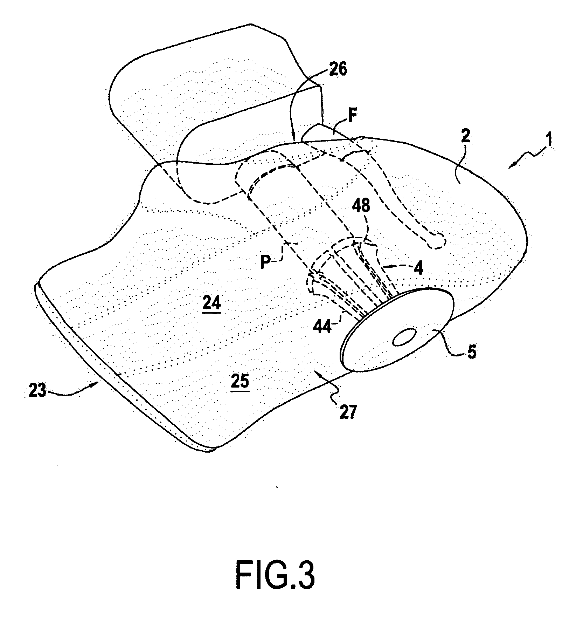

Comme il ressort des figures **2** et **3****,** le dispositif **1** de l'invention comporte également des moyens de fixation du fourreau **2** sur une poignée **P** de guidon. Ces moyens de fixation sont avantageusement constitués selon la présente invention par un embout de serrage **4** monté mobile en rotation autour d'un axe de rotation **A** sur un socle **5** solidaire d'un côté longitudinal **27** du fourreau **2** opposé au panneau **26** comprenant les premier et second orifices **21, 22** d'introduction de la poignée **P** et du levier de frein **F.**

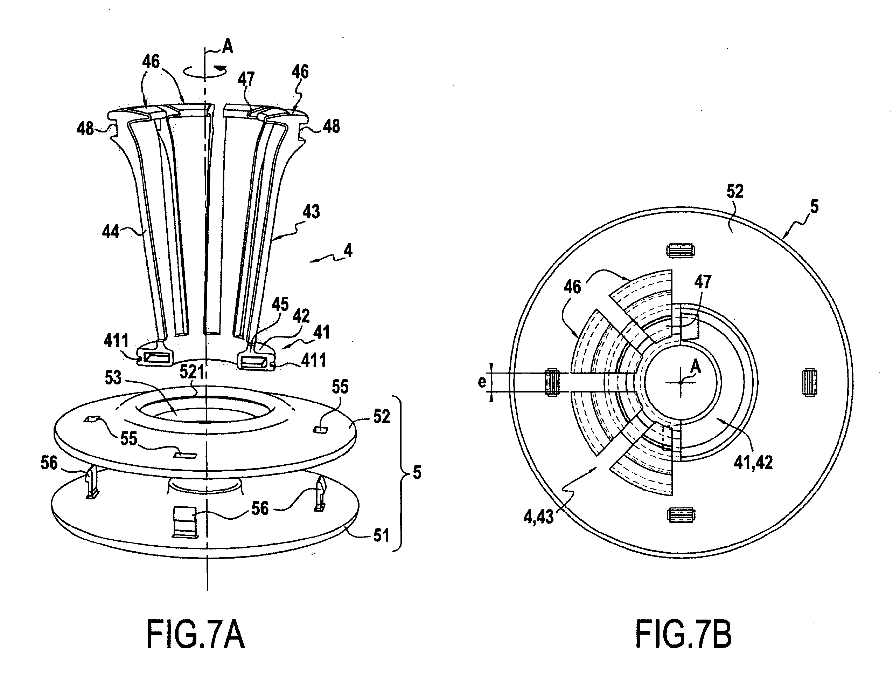

Selon une forme préférée de réalisation présentée en détail sur les figures **7A** et **7B****,** l'embout de serrage **4** comporte une embase **41** annulaire de montage sur le socle **5** depuis une surface **42** de laquelle s'étendent coaxialement à l'axe de rotation **A,** en formant une corolle **43** sensiblement conique, des griffes **44** flexibles par élasticité à leur base **45** de liaison sur l'embase annulaire **41.** Les griffes **44** sont séparées à leur base **45** d'un écartement **e,** de préférence constant, afin d'individualiser chacune des griffes **44** et de permettre leur flexibilité indépendamment les unes des autres. De plus, les griffes **44** comportent de préférence à une extrémité supérieure libre une tête **46** plus large que leur base **45** de liaison à l'embase **41,** conférant ainsi à chacune des griffes **44** une forme sensiblement triangulaire.

Chaque griffe **44** comporte par ailleurs, sur sa tête **46** un crochet **47** prenant par exemple la forme d'une dent s'étendant à partir de la paroi interne de la griffe vers l'axe de rotation **A,** qui est aussi l'axe de révolution de la corolle **43,** dans une direction sensiblement perpendiculaire à la direction d'extension de chaque griffe **44** depuis l'embase **41.** Les crochets **47** sont donc dirigés vers l'intérieur de la corolle **43.**

La tête **46** de chacune des griffes **44** comporte également sur sa surface externe une rainure **48** formant en combinaison avec les rainures **48** des autres griffes **44** une gorge annulaire sur le pourtour supérieur de la corolle **43.** Cette gorge annulaire est avantageusement destinée à loger un lien de serrage **6** des griffes **44** sur une poignée de guidon lors de l'installation du dispositif de protection de l'invention sur un guidon de véhicule, comme il sera décrit ultérieurement.

Le socle **5** est composé dans le mode de réalisation présenté, d'une plaque **51** et d'une contreplaque **52.** La plaque **51** et contreplaque **52** comportent des moyens de liaison l'une à l'autre, réversibles ou non, et notamment des ergots **56** faisant saillie sur une face de la plaque **51** destinés à s'insérer dans des orifices **55** de forme complémentaire pratiqués dans la contreplaque **52** pour permettre l'encliquetage de la contreplaque **52** sur la plaque **51.**

Cet ensemble plaque **51 -** contreplaque **52** formant le socle **5** est avantageusement conçu pour permettre une fixation rapide sur un côté du fourreau du dispositif de l'invention, en regard de l'orifice d'introduction de poignée, comme il ressort des figures **2** à **4****.** Il suffit pour cela lors de la fabrication du dispositif **1** de prendre en sandwich la matière constitutive du fourreau à l'endroit souhaité sur le côté de celui-ci, puis de presser la plaque **51** et le contreplaque **52** l'une contre l'autre de part et d'autre du fourreau après avoir pratiqué des incisions de passage des ergots **54** dans le fourreau de manière à solidariser la plaque **51** et la contreplaque **52** sur le fourreau.

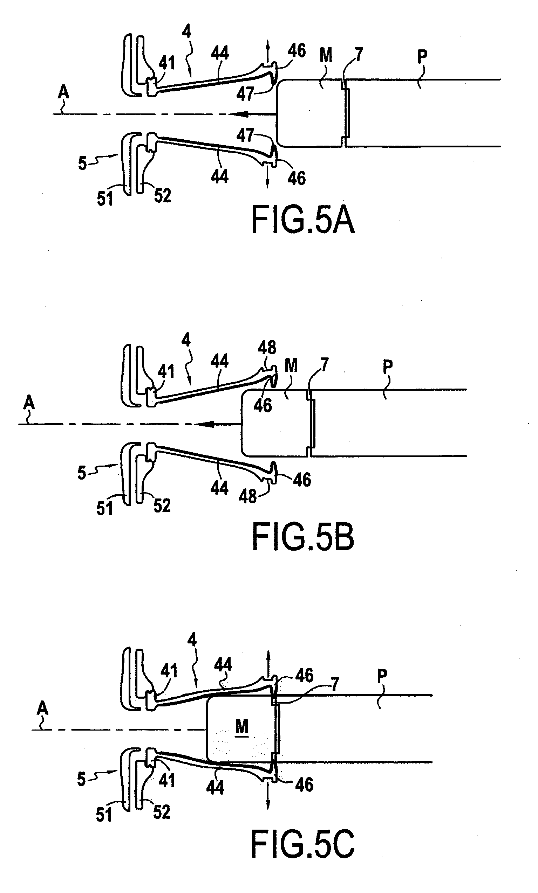

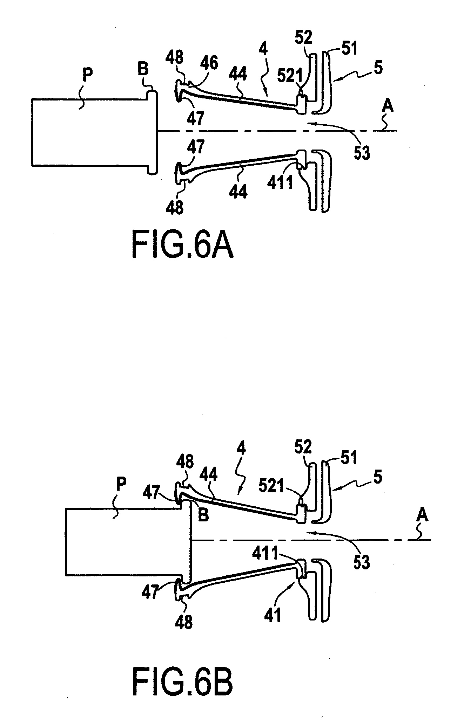

Selon la forme de réalisation représentée, et comme il apparait plus clairement sur les figures **5A-5C** et **6A-6B,** l'embout de serrage **4** est monté pivotant sur le socle **5** au niveau de son embase annulaire **41,** configurée avantageusement pour s'encliqueter sur la contreplaque **52** du socle **5** dans un orifice circulaire **53** prévu à cet effet.

Plus précisément, l'embase annulaire **41** comporte sur sa périphérie une gorge **411** torique de forme complémentaire d'un bourrelet **521,** lui aussi torique, formé sur le bord de l'ouverture circulaire **53** de réception de l'embout de serrage **4** sur la contreplaque. Ainsi, lorsque l'embase annulaire **41** est forcée dans l'ouverture **53** de la contreplaque, le bourrelet **521** vient se loger par déformation élastique dans la gorge **411** sur la périphérie de ladite embase, opérant ainsi la liaison par encliquetage de l'embout de serrage **4** sur le socle **5** tout en autorisant la rotation dudit embout dans l'orifice **53** autour de l'axe de rotation **A.**

Avantageusement, l'embout de serrage **4** et le socle **5** peuvent être réalisés l'un et l'autre en une matière synthétique ou métallique. De préférence cependant pour des raisons de facilité et de coûts de fabrication, ces deux pièces sont réalisées en une matière synthétique et notamment en Nylon® par exemple ou encore toute matière plastique injectable ductile.

La mise en oeuvre du dispositif de protection de l'invention **1** est, par sa structure particulière, très aisée pour l'utilisateur.

L'installation du dispositif de protection **1** sur les poignées de guidon d'un véhicule s'effectue comme représenté aux figures **1** à **4****.** Sur ces figures, on considère une poignée de gaz **P** d'un guidon de scooter par exemple.

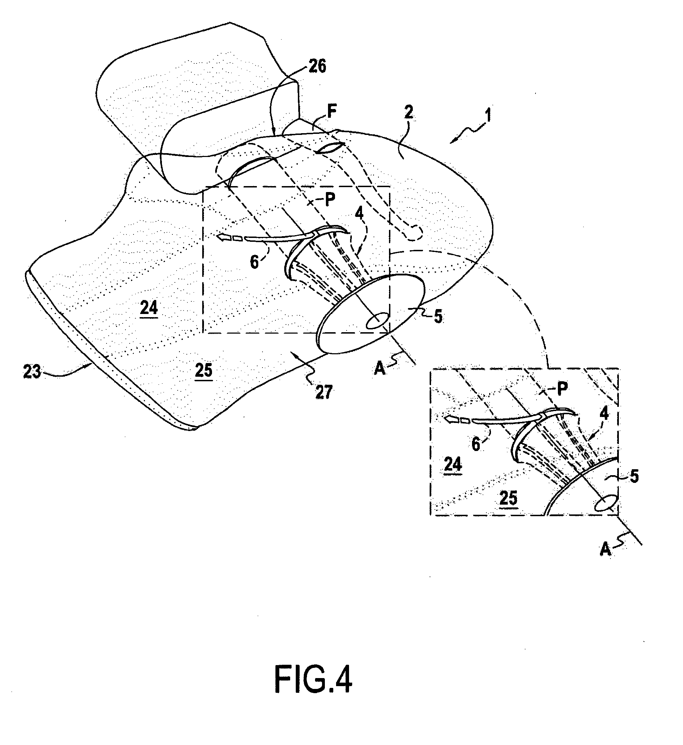

Dans un premier temps, il convient d'insérer, de préférence simultanément, la poignée de gaz **P** et son levier de frein **F** dans les orifices **1** et **22** respectivement dans le panneau de côté **26** du fourreau **2** comme représenté aux figures **1** à **3****.** Une fois la poignée **P** insérée dans l'orifice **21,** on positionne ensuite l'extrémité libre de celle-ci dans l'embout de serrage **4** comme représenté plus en détail sur les figures **3** et **4****.**

Les griffes **44** de l'embout de serrage **4** étant individuellement flexibles à leur base **45** sur l'embase annulaire **41** de l'embout de serrage **4,** elles s'écartent les unes des autres pour permettre l'introduction de l'extrémité de la poignée **P** entre les têtes **46** des griffes **44.** L'élasticité de la matière constitutive des griffes **44** et les crochets **47** au niveau des têtes **46** de ces griffes **44** procurent alors un effet de serrage et de coincement sur la poignée **P.** Avantageusement, pour renforcer cet effet de serrage, la surface interne des griffes **44** et de leurs crochets est revêtue d'une matière de type élastomère, à fort coefficient de frottement, pour empêcher le glissement de la poignée **P** entre les griffes **44** après emboîtement. Une fois la poignée positionnée dans l'embout de serrage **4,** il suffit pour finir de sécuriser l'assemblage de l'embout de serrage **4** à la poignée **P,** de passer un lien de serrage **6** tel qu'un collet automatique autour des têtes **46** des griffes **44** dans la gorge périphérique prévue à cet effet et de serrer l'ensemble (fig. **4****).** Le cas échéant, il est aussi possible de positionner le collet **6** directement dans la gorge dédiée sur l'embout de serrage avant le début de l'installation pour faciliter encore la mise en place rapide du dispositif de protection **1.**

Le dispositif de protection **1** est alors installé sur la poignée **P** et il suffit de reproduire la même opération d'installation sur la seconde poignée du guidon du véhicule.

Lors du pilotage du véhicule ainsi équipé, l'assemblage de la poignée à l'embout de serrage **4** à l'intérieur du fourreau **2** du dispositif de protection **1** n'entrave absolument pas les opérations du pilote, notamment la rotation de la poignée de gaz **P** dans la mesure où l'embout de serrage **4** pivote lui-même autour de son axe de rotation **A** par rapport au socle **5** solidaire du fourreau **2.** Ainsi, le maintien du dispositif de protection **1** est particulièrement efficace sans entraver l'aisance de pilotage et donc sans danger pour le conducteur.

Les figures **5A** à **5C** et **6A** à **6B** représentent schématiquement le mode d'installation avantageux de l'embout de serrage **4** du dispositif de protection de l'invention sur des poignées **P** particulières à masselotte **M** ou butée **B** respectivement.

Sur les figures **5A** à **5C****,** la poignée **P** est par une poignée équipée à son extrémité d'une masselotte **M**. Lors de l'insertion de la poignée **P** entre les griffes **44,** les crochets **47** glissent sur la masselotte **M** jusqu'à venir s'insérer dans un interstice **7** de liaison de la masselotte **M** à la poignée **P** (fig. **5C**). La forme de dent des crochets **47** favorise alors l'effet de crochetage de l'embout de serrage **4** sur la poignée **P** et l'ajout ensuite d'un collet **6** de serrage permet de totalement verrouiller l'assemblage de l'embout à la poignée **P.**

Sur les figures **6A** et **6B****,** la poignée **P** est équipée d'une butée **B** d'extrémité. De façon analogue, lors de l'installation du dispositif de protection de l'invention, les crochets **47** des griffes **44** de l'embout de serrage **4** viennent s'accrocher autour de la butée **B** (fig. **6B**), ce qui sécurise là aussi l'assemblage de la poignée à l'embout de serrage **4,** qui peut ensuite être sécurisé par un collet de serrage **6** au niveau de la gorge externe des griffes **44.**

Le dispositif de protection **1** de la présente invention procure ainsi une solution efficace et facile à installer et utiliser pour la protection des mains d'un conducteur de véhicule motorisé équipé d'un guidon tel qu'un scooter, une moto, un tricycle ou encore un quad.

## Revendications

1. Dispositif **(1)** de protection des mains d'un conducteur de véhicule motorisé muni d'un guidon de direction, comportant un fourreau **(2)** de protection comportant sur un côté au moins un orifice d'insertion **(21, 22)** d'une poignée **(P)** de guidon et d'un levier de frein **(F)** associé à cette poignée et au moins une ouverture postérieure **(23)** permettant le passage et l'insertion d'une main à l'intérieur du fourreau **(2),** et des moyens de fixation du fourreau **(2)** à une extrémité libre de la poignée **(P)** de guidon **caractérisé en ce que** les moyens de fixation du fourreau comportent un socle **(5)** solidaire du fourreau et un embout de serrage **(4)** de l'extrémité libre de la poignée **(P)** du guidon, apte à être emboîté sur ladite poignée par déformation élastique et monté pivotant sur le socle **(5)** autour d'un axe de rotation **(A).**

2. Dispositif selon la revendication 1, **caractérisé en ce que** l'embout de serrage **(4)** coopère avec un élément de sertissage **(6)** dudit embout sur la poignée.

3. Dispositif selon la revendication 1 ou 2, **caractérisé en ce que** l'embout de serrage **(4)** comporte au moins deux griffes **(44)** symétriques par rapport à l'axe de rotation **(A)** de l'embout de serrage **(4)** sur le socle **(5)** et mobiles par déformation élastique par rapport à cet axe de rotation, lesdites griffes **(44)** comprenant à une extrémité libre une tête **(46)** munie d'un crochet **(47).**

4. Dispositif selon la revendication 3, **caractérisé en ce que** l'embout de serrage **(4)** comporte entre deux et dix griffes **(44)** symétriques par rapport à l'axe de rotation **(A)** de l'embout de serrage **(4)** sur le socle **(5)** et mobiles par déformation élastique par rapport à cet axe de rotation, lesdites griffes s'inscrivant dans une enveloppe de révolution conique ou tronconique autour de l'axe de rotation.

5. Dispositif selon la revendication 2 et l'une des revendications 3 ou 4, **caractérisé en ce que** l'élément de sertissage **(6)** est logé dans une gorge formée sur une paroi externe de la tête **(46)** des griffes.

6. Dispositif selon l'une des revendications 3 à 5, **caractérisé en ce que** les griffes **(44)** comportent sur leur paroi interne un surfaçage antidérapant.

7. Dispositif selon la revendication 6, **caractérisé en ce que** le surfaçage antidérapant est constitué d'une matière à base d'élastomère ou par un traitement de surface de la paroi interne des griffes.

8. Dispositif selon l'une des revendications 1 à 6, **caractérisé en ce que** le socle **(5)** et l'embout de serrage **(4)** sont constitués d'une matière plastique ou métallique.

9. Dispositif selon l'une des revendications 1 à 8, **caractérisé en ce que** le fourreau **(2)** comporte un orifice d'insertion **(21)** pour la poignée **(P)** de guidon et un orifice d'insertion **(22)** du levier de frein **(F),** lesdits orifices étant distincts.

10. Dispositif selon l'une des revendications 1 à 9, **caractérisé en ce que** le fourreau **(22)** est constitué d'une matière synthétique ou naturelle.

## Patentansprüche

1. Vorrichtung (1) zum Schutz der Hände eines Fahrers eines mit einem Lenker versehenen motorisierten Fahrzeugs, umfassend eine Schutzhülle (2), die an einer Seite wenigstens eine öffnung zum Einführen (21, 22) eines Lenkergriffes (P) und eines diese Griff zugeordneten Bremshebels (F) sowie wenigstens eine hintere Öffnung (23), welche das Durchführen und das Einführen einer Hand in die Hülle (2) ermöglicht, umfasst, sowie Mittel zum Befestigen der Hülse (2) an einem freien Ende des Lenkergriffes (P), **dadurch gekennzeichnet, dass** die Mittel zum Befestigen der Hülle einen mit der Hülle fest verbundenen Sockel (5) und einen Ansatz zum Festklemmen (4) des freien Endes des riffes (P) des Lenkers umfassen, der geeignet ist, durch elastische Verformung auf den Griff aufgesteckt zu werden, und der an dem Sockel (5) um eine Rotationsachse (A) drehbar angebracht ist.

2. Vorrichtung nach Anspruch 1, **dadurch gekennzeichnet, dass** der Festklemmansatz (4) mit einem Element zum Anpressen (6) des Ansatzes an den Griff zusammenwirkt.

3. Vorrichtung nach Anspruch 1 oder 2, **dadurch gekennzeichnet, dass** der Festklemmansatz (4) wenigstens zwei Klauen (44) umfasst, die in Bezug auf die Rotationsachse (A) des Festklemmansatzes (4) an dem Sockel (5) symmetrisch und gegenüber dieser Rotationsachse durch elastische Verformung beweglich sind, wobei die Klauen (44) an einem freien Ende einen mit einem Haken (47) versehenen Kopf (46) umfassen.

4. Vorrichtung nach Anspruch 3, **dadurch gekennzeichnet, dass** der Festklemmansatz (4) zwischen zwei und zehn Klauen (44) umfasst, die in Bezug auf die Rotationsachse (A) des Festklemmansatzes (4) an dem Sockel (5) symmetrisch und gegenüber dieser Rotationsachse durch elastische Verformung beweglich sind, wobei die Klauen sich in eine kegelförmige oder kegelstumpfförmige Rotationshülle um die Rotationsachse einfügen.

5. Vorrichtung nach Anspruch 2 und einem der Ansprüche 3 oder 4, **dadurch gekennzeichnet, dass** das Anpresselement (6) in einer an einer Außenwand des Kopfes (46) der Klauen ausgebildeten Nut aufgenommen ist.

6. Vorrichtung nach einem der Ansprüche 3 bis 5, **dadurch gekennzeichnet, dass** die Klauen (44) an ihrer Innenwand eine rutschfeste Oberfläche umfassen.

7. Vorrichtung nach Anspruch 6, **dadurch gekennzeichnet, dass** die rutschfeste Öberfläche von einem Material auf Elastomerbasis oder durch eine Öberflächenbehandlung der Innenwand der Klauen gebildet ist.

8. Vorrichtung nach einem der Ansprüche 1 bis 6, **dadurch gekennzeichnet, dass** der Sockel (5) und der Festklemmansatz (4) aus einem unststoff oder metallischem Material gebildet sind.

9. Vorrichtung nach einem der Ansprüche 1 bis 8, **dadurch gekennzeichnet, dass** die Hülle (2) eine inführöffnung (21) für den Lenkergriff (P) und eine Öffnung zum Einführen (22) des Bremshebels (F) umfasst, wobei die Öffnungen getrennt sind.

10. Vorrichtun nach einem der Ansprüche 1 bis 9, **dadurch gekennzeichnet, dass** die Hülle (2) aus einem synthetischen oder natürlichen Material gebildet ist.

## Claims

1. A device (**1**) for protecting the hands of the driver of a motorized vehicle provided with a steering handlebar, including a protective sheath (**2**) including, on one side, at least one insertion orifice (**21**, **22**) for a handlebar handle (**P**) and a brake lever (**F**) associated with that handle and at least one rear opening (**23**) allowing the passage and insertion of a hand inside the sheath (**2**), and means for fastening the sheath (**2**) at a free end of the handlebar handle (**P**), **characterized in that** the fastening means for the sheath include a base (**5**) secured to the sheath and alping tip (**4**) for the free end of the handle (**P**) of the handlebar, which can be snapped on said handle by elastic deformation and pivotably mounted on the base (**5**) around an axis of rotation (**A**).

2. The device according to claim 1, **characterized in that** the clamping tip (**4**) cooperates with a crimping element (**6**) for crimping said tip on the handle.

3. The device according to claim 1 or 2, **characterized in that** the clapping tip (**4**) includes at least two prongs (**44**) that are symmetrical relative to the axis of rotation (**A**) of the clamping tip (**4**) on the base (**5**) and movable by elastic deformation relative to that axis of rotation, one free end of said prongs (**44**) comprising a head (**46**) provided with a hook (**47**).

4. The device according to claim 3, **characterized in that** the clamping tip (**4**) includes between two and ten prongs (**44**) that are symmetrical relative to the axis of rotation (**A**) of the clamping tip (**4**) on the base (**5**) and movable through elastic deformation relative to that axis of rotation, said prongs fitting into a conical or frustoconical enclosure of revolution around the axis of rotation.

5. The device according to claim 2 and one of claims 3 or 4, **characterized in that** the crimping element (**6**) is housed in a groove formed on an outer wall of the head (**46**) of the prongs.

6. The device according to one of claims 3 to 5, **characterized in that** the prongs (**44**) inclue a non-skid surface facing on their inner wall.

7. The device according to claim 6, **characterized in that** the non-skid surface facing is made up of an elastomer base or a surface treatment of the inner wall of the prongs.

8. The device according to one of claims 1 to 6, **characterized in that** the base (**5**) and the clamping tip (**4**) are made from a plastic or metal material.

9. The device according to one of claims 1 to 8, **characterized in that** the sheath (**2**) includes an insertion orifice (**21**) for the handlebar handle (**P**) and an insertion orifice (**22**) for the brake lever (**F**), said orifices being separate.

10. The device according to one of claims 1 to 9, **characterized in that** the sheath (**22**) is made from a synthetic or natural material.
